# EUROPÄISCHE PATENTSCHRIFT

(11) **EP 1 570 564 B1**
(45) Veröffentlichungstag und Bekanntmachung des Hinweises auf die Patenterteilung: **28.07.2010**
(21) Anmeldenummer: 03737910.4
(22) Anmeldetag: 26.05.2003
(51) Int. Cl.: H02K 1/27, H02K 1/02

(54) **ELEKTRISCHE MASCHINE, INSBESONDERE BÜRSTENLOSER SYNCHRONMOTOR**
ELECTRIC MACHINE, IN PARTICULAR BRUSHLESS SYNCHRONOUS MOTOR
MACHINE ELECTRIQUE, EN PARTICULIER MOTEUR SYNCHRONE SANS BALAIS

(30) Priorität: 04.12.2002 DE 10256523
(43) Veröffentlichungstag der Anmeldung: 07.09.2005
(73) Patentinhaber: ROBERT BOSCH GMBH, 70442 Stuttgart (DE)
(72) Erfinder: EVANS, Susanne, 77815 Buehl (DE); EVANS, Steven-Andrew, 77813 Buehl (DE)
(86) Internationale Anmeldenummer: PCT/DE2003/001714
(87) Internationale Veröffentlichungsnummer: WO 2004/051824

(56) Entgegenhaltungen:
- EP-A- 0 538 472
- EP-A- 0 926 801
- WO-A1-96/30144
- DE-A- 19 851 883
- US-A- 5 672 926
- PATENT ABSTRACTS OF JAPAN vol. 018, no. 540 (E-1616), 14. Oktober 1994 (1994-10-14) -& JP 06 189481 A (AICHI EMERSON ELECTRIC CO LTD), 8. Juli 1994 (1994-07-08)
- PATENT ABSTRACTS OF JAPAN vol. 1997, no. 09, 30. September 1997 (1997-09-30) -& JP 09 131009 A (MITSUBISHI ELECTRIC CORP), 16. Mai 1997 (1997-05-16)

## Beschreibung

### Stand der Technik

Die Erfindung geht aus von einer elektrischen Maschine, insbesondere einem bürstenlosen Synchronmotor, nach dem Oberbegriff des Anspruchs 1.

Bei herkömmlichen, permanentmagneterregten, bürstenlosen Synchronmotoren, die als Innenläufermotoren konzipiert sind, sind die das Erregerfeld im Arbeitsluftspalt zwischen Rotor und Stator erzeugenden Permanentmagnete als Schalensegmente auf der Oberfläche des Rotors fixiert. Ein solcher Synchronmotor weist, wenn er optimiert ist, ein niedriges Rastmoment und eine geringe Drehmomentenwelligkeit auf, was sehr günstig für bestimmte Anwendungen des Motors ist, wo ein sehr glattes Drehmoment gefordert wird. Der Nachteil dieses Motors ist der hohe Gestehungspreis, der insbesondere in der Herstellung der schalenförmigen Permanentmagnete begründet ist, die zur Erzeugung der Schalenform geschliffen werden müssen.

Um die Herstellungskosten zu reduzieren, sind daher bürstenlose Synchronmotoren entwickelt worden, bei denen die Permanentmagnete in den Rotor eingebettet, darin "vergraben" sind (EP 1028 047 A2). Die "vergrabenen" Permanentmagnete sind meist rechteckförmig und lassen sich einfach aus einem großen Block des Permanentmagnetmaterials schneiden, was gegenüber einem Schalensegmentmagneten eine Kosteneinsparung mit sich bringt. Ein solcher bekannter bürstenloser Synchronmotor mit "innen vergrabenen" Permanentmagneten, auch IPM-Motor genannt, neigt selbst bei Optimierung zu einem wesentlich höheren Rastmoment und einer höheren Drehmomentenwelligkeit als ein vergleichbarer Motor mit schalenförmigen Permanentmagnetsegmenten auf der Rotoroberfläche. '

Mit der DE-A-19851883 ist eine Synchronmaschine bekannt geworden, bei der Permanentmagnete in Aussparungen im Rotor angeordnet sind. Dabei sind radial außerhalb der Permanentmagnete schlitzförmige Magnetflußsperren angeordnet.

Mit der US-A-5 672 926 ist eine hybriderregte elektrische Maschine bekannt geworden, bei der der Rotor radiale Schlitze aufweist, diese radialen Schlitze erhöhen den magnetischen Widerstand in Querrichtung zum magnetischen Fluß.

Die JP-A-09131009 zeigt einen Rotor mit schalenförmigen Permanentmagneten, die innerhalb des Rotors angeordnet sind. Die Aufnahmeöffnungen für die Permanentmagnete weisen radiale, nach außen gerichtete Schlitze mit dazwischen liegenden Federelementen auf, die das Einfügen der Permanentmagnete erleichtern.

Die EP-A-0 926 801 zeigt einen Generator mit einem Rotor, in dem Permanentmagnete angeordnet sind: Die Permanentmagnete sind hierbei zwischen einem sechseckigen Rotorkern und einem Rückschlußring mittels Gießharz eingeschlossen.

Die WO-A-9630144 offenbart allgemein die Verwendung von anisotropic composite material für Elektromotoren.

### Vorteile der Erfindung

Die erfindungsgemäße elektrische Maschine, insbesondere der erfindungsgemäße bürstenlose Synchronmotor, mit den Merkmalen des Anspruchs 1 hat gegenüber dem bekannten IPM-Motor den Vorteil eines wesentlich reduzierten Rastmoments und einer wesentlich geringeren Drehmomentenwelligkeit. Gegenüber dem bekannten, bürstenlosen Synchronmotor mit schalenförmigen Permanentmagnetsegmenten auf der Oberfläche des Rotors sind die Herstellungskosten wesentlich niedriger und liegen auf dem gleichen Niveau wie für den bekannten IPM-Motor.

Durch die erfindungsgemäße magnetische Anisotropie der Polschuhe, also der den "vergrabenen" Permanentmagneten hin zum Arbeitsluftspalt vorgelagerten Bereiche des Rotors, wird der Verlauf der induzierten Spannung oder EMK - anders als bei den bekannten IPM-Motoren mit etwa trapezförmigen Spannungsverlauf - sinusförmig, so daß der Klirrfaktor der EMK kleiner ist, damit bei Verwendung von sinusförmigem Speisestrom die Drehmomentenwelligkeit kleiner ist. Der Spitzenwert der EM K steigt und damit auch das vom Motor abgegebene mittlere Drehmoment, wenn keine Vorkommutierung verwendet wird. Weiterhin werden durch die magnetische Anisotropie der Polschuhe die Eisenverluste in den Polschuhen und auch das Ankerquerfeld reduziert. Für hohe Strangströme ergibt sich eine gegenüber den bekannten IPM-Motoren verringerte Schenkeligkeit (das ist das Verhältnis der Querinduktivität L_{q} zur Längsinduktivität L_{d}), die idealerweise 1 sein soll, was ebenfalls die Drehmomentenwelligkeit reduziert.

Gemäß des Oberbegriffs des Anspruchs 1 der Erfindung sind zur Erzielung der magnetischen Anisotropie in die Polschuhe eine Mehrzahl von voneinander beabstandeten Flußbarrieren eingearbeitet, die parallel zur radialen Schenkelpolachse verlaufen. Die Flußbarrieren worden von Aussparungen in den Polschuhen gebildet, können. Die Ausbildung der Flußbarrieren als Aussparungen hat den Vorteil, daß die Masse der Polschuhe reduziert wird, wobei die Reduzierung z.B. für eine sechspolige oder vierpolige Ausführung des Rotors ca. 34% beträgt. Die reduzierte Masse führt zu einer Verringerung des Trägheitsmoments, was wiederum die dynamischen Eigenschaften der elektrischen Maschine verbessert. Die verringerte Fliehkraft erlaubt bei gleicher Radialstegbreite eine höhere Drehzahl.

Durch die in den weiteren Ansprüchen aufgeführten Maßnahmen sind vorteilhafte Weiterbildungen und Verbesserungen der im Anspruch 1 angegebenen elektrischen Maschine möglich.

Gemäß einer bevorzugten Ausführungsform der Erfindung sind die Permanentmagnete rechteckförmig ausgebildet und weisen eine zur Normalen auf den größeren Magnetflächen parallel verlaufende Magnetisierungsrichtung auf. Die Vorzugsrichtung der größeren magnetischen Leitfähigkeit oder relativen Permeabilität der Polschuhe ist so ausgerichtet, daß sie in die Magnetisierungsrichtung der Permanentmagnete weist.

### Zeichnung

Die Erfindung ist anhand von in der Zeichnung dargestellten Ausführungsbeispielen in der nachfolgenden Beschreibung näher erläutert. Es zeigen:
- Fig. 1: einen Querschnitt eines sechspoligen bürstenlosen Synchronmotors, schematisiert dargestellt,
- Fig. 2: eine vergrößerte Darstellung des Ausschnitts II in Fig. 1 mit eingezeichnetem Flußverlauf,
- Fig. 3 bis 9: verschiedene Diagramme der Eigenschaften des Motors zur Verdeutlichung der Vorteile gegenüber dem bekannten IPM- Motor,
- Fig. 10: ausschnittweise einen Querschnitt eines bürstenlosen Synchronmotors gemäß einem weiteren Beispiel, schematisiert dargestellt. Figur 10 gehörz nicht zum Gegenstand der Erfindung.

### Beschreibung der Ausführungsbeispiele

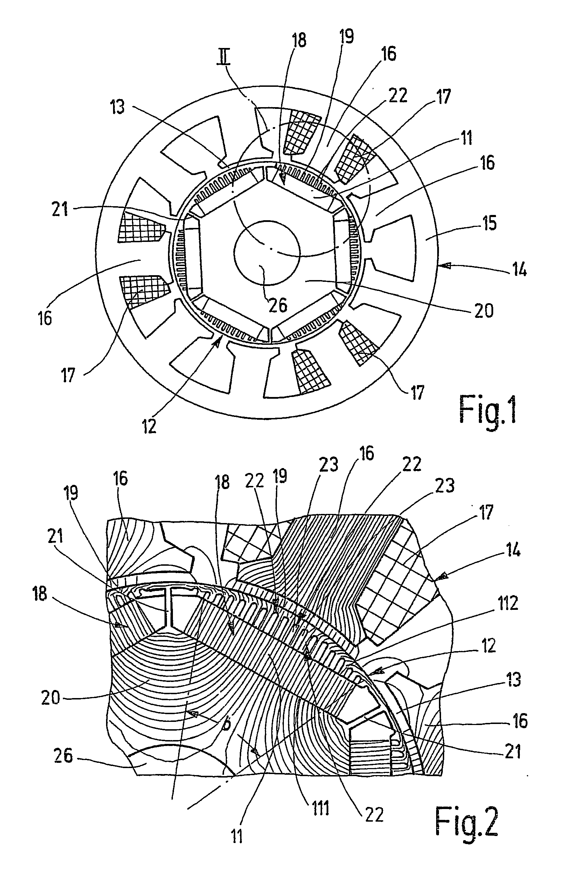

Der in Fig. 1 im Querschnitt schematisiert dargestellte bürstenlose Synchronmotor als Ausführungsbeispiel für eine allgemeine elektrische Maschine ist als Innenläufermotor ausgeführt und weist einen mit Permanentmagneten 11 bestückten Rotor 12 und einen den Rotor 12 unter Ausbildung eines Arbeitsluftspalts 13 konzentrisch umschließenden Stator 14 auf. Der Stator 14 besteht aus einem Rückschlußring 15 und einer Vielzahl von Statorzähnen 16, die vom Rückschlußring 15 radial nach innen vorstehen und in Umfangsrichtung äquidistant angeordnet sind. Auf jedem Statorzahn 16 ist eine Ringspule 17 aufgewickelt, wobei in Fig. 1 nur die Ringspulen 17 einer Phase oder eines Strangs der Statorwicklung dargestellt ist. Im Ausführungsbeispiel der Fig. 1 ist die Statorwicklung dreiphasig oder dreisträngig mit jeweils drei in Reihe oder parallel geschalteten Ringspulen 17 ausgeführt. Entsprechend beträgt die Anzahl der Statorzähne 16 neun.

Der Rotor 12 des beispielhaft sechspolig ausgeführten Synchronmotors weist sechs Schenkelpole 18 mit jeweils einem eingeschlossenen Permanentmagneten 11 und einem sich daran radial nach außen zum Luftspalt 13 hin fortsetzenden Polschuh 19 auf. Der Rotor 12 hat einen polygonalen, prismenförmigen Rotorkern 20, der im Ausführungsbeispiel des sechspoligen Synchronmotors ein Sechskantprisma ist. Eine zentrale, zylinderförmige Öffnung 26 dient zum Aufschieben des Rotorkerns 20 auf eine Rotorwelle. An jeder Prismenseite des hexagonalen Rotorkerns 20 liegt jeweils ein als flacher Quader ausgeführter Permanentmagnet 11 mit seiner großen Magnetfläche 111 an (Fig. 2), so daß die Normale auf der Magnetfläche in Radialrichtung weist. Die von dieser Magnetfläche 111 abgekehrte gleich große Magnetfläche 112 wird von den Polschuhen 19 überdeckt. Die Polschuhe 19 aller Schenkelpole 18 stoßen in Umfangsrichtung gesehen einstückig aneinander und sind hier mittels schmaler Radialstege 21 an dem Rotorkern 20 einstückig angebunden, wobei die Radialstege 21 von den Kanten des hexagonalen Prismas abstehen. Der Rotorkern 20 mit Polschuhen 19 und Radialstegen 21 ist aus einer Vielzahl von einstückigen, aneinanderliegenden, profilierten Blechlamellen zusammengesetzt. Die in den Schenkelpolen 18 aufgenommenen Permanentmagnete 11 sind so magnetisiert, daß ihre Magnetisierungsrichtung parallel zur Normalen auf den großen Magnetflächen 111, 112 verläuft, wobei bei in Umfangsrichtung gesehen aufeinanderfolgenden Permanentmagneten 11 die Magnetisierungsrichtung um 180° gedreht ist, so daß in benachbarten Schenkelpolen 18 die Magnetisierungsrichtung entgegengesetzt ist.

Um einen sinusförmigen Verlauf der induzierten Spannung zu erzielen, die mit einem sinusförmigen Strangstrom zusammen einen Drehmomentenverlauf mit einer sehr geringen Drehmomentenwelligkeit ergibt, sind die den Permanentmagneten 11 zum Luftspalt 13 hin vorgeordneten Polschuhe 19 magnetisch anisotrop ausgebildet, wobei sie eine Vorzugsrichtung der größeren magnetischen Leitfähigkeit oder Permeabilität aufweisen, die parallel zu der radialen Schenkelpolachse verläuft, also mit der Magnetisierungsrichtung der Permanentmagnete 11 übereinstimmt. Durch diese Anisotropie der Schenkelpole 18 wird der Magnetfluß in den Schenkelpolen 18 in eine parallele Richtung gezwungen, wie dies aus dem in Fig. 2 eingezeichneten Verlauf der Flußlinien zu erkennen ist.

Bei dem in Fig. 1 und 2 dargestellten Ausführungsbeispiel des Synchronmotors ist die magnetische Anisotropie durch eine Mehrzahl von Flußbarrieren 22 erzielt, die in Abstand voneinander in die Polschuhe 19 so eingearbeitet sind, daß sie parallel zur radialen Schenkelpolachse verlaufen. Die Flußbarrieren 22 für den magnetischen Fluß sind dabei durch Aussparungen 23 realisiert, die zusammen mit dem Blechschnitt der Blechlamellen für den Rotor 12 kammartig mit zu dem Blechkern weisenden Kammöffnungen, die bei dann eingesetzten Permanentmagneten 11 an deren Magnetfläche 112 anliegen, ausgestanzt werden. Die Anzahl der Aussparungen 23 pro Polschuh 19 ist abhängig von der Breite der Schenkelpole 18, also der in Umfangsrichtung gesehenen Breite der Permanentmagnete 11 und Polschuhe 19, und der Dicke der Blechlamellen gewählt. Vorzugsweise ist die Zahl der Aussparungen 23 so groß wie möglich (bei kleinen Motoren ca. zehn bis zwanzig), wobei die Zahl der Aussparungen 23 am Umfang mit wachsender Polzahl des Synchronmotors zunimmt. Wie hier nicht dargestellt ist, können die Flußbarrieren alternativ auch von Einschlüssen aus magnetisch nichtleitendem Material gebildet werden, wobei die Einschlüsse wiederum im Parallelabstand voneinander in den Polschuhen 19 angeordnet werden.

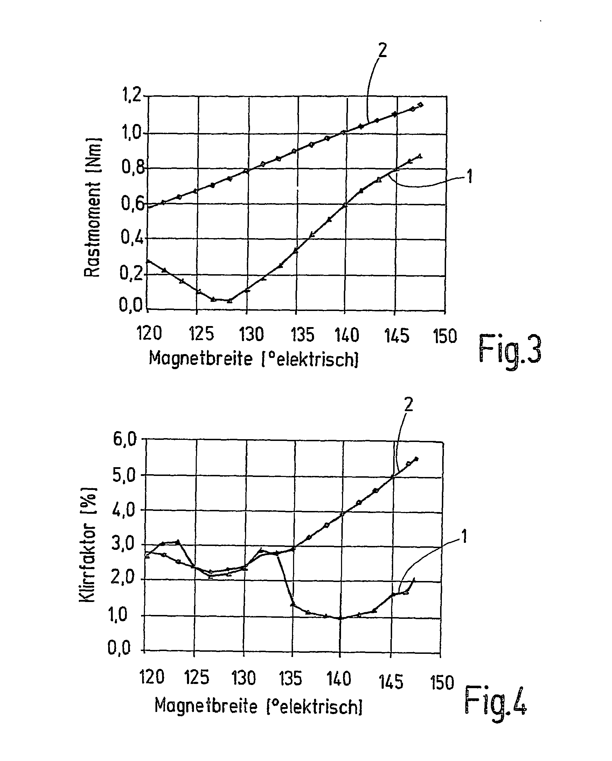

In den Diagrammen der Fig. 3 bis 9 werden die vorteilhaften elektromagnetischen Eigenschaften des neuartigen, vorstehend beschriebenen Synchronmotors gemäß Fig. 1 und 2 im Vergleich zu einem bekannten, gleich ausgelegten IPM-Motor ohne Flußbarrieren verdeutlicht. Die mit "1" gekennzeichneten Kurven in den Diagrammen kennzeichnen den Synchronmotor mit Flußbarrieren gemäß Fig. 1 und 2, die mit "2" gekennzeichneten Kurven sind dem bekannten, herkömmlichen IPM-Motor ohne Flußbarrieren in den Polschuhen zugehörig. Die verschiedenen elektromagnetischen Eigenschaften der Synchronmotoren gemäß den Diagrammen in Fig. 3 - 5 und Fig. 7 und 8 sind jeweils in Abhängigkeit von der Magnetbreite b dargestellt, wie sie in Fig. 2 definiert ist. Die Magnetbreite b ist in elektrischen Winkelgraden angegeben. Die dargestellten Ergebnisse beziehen sich auf Motoren ohne geschrägte Rotoren oder Statoren.

Das Diagramm in Fig. 3 zeigt den Rastmomentverlauf in Abhängigkeit von der Magnetbreite b. Der optimale Winkel der Magnetbreite b des Synchronmotors mit Flußbarrieren beträgt ungefähr 128° elektrisch, bei dem ein Spitzen-Spitzen-Wert des Rastmoments von nur 0,05Nm erzeugt wird, im Vergleich zu einem optimalen Wert von 0,57Nm für den bekannten IPM-Motor bei einem optimalen Winkel der Magnetbreite von 120° elektrisch. Durch die anisotropen Schenkelpolen 18 mit den mehrfachen, parallelen Flußbarrieren 22 wird damit eine 91%ige Reduktion des Minimal-Spitzen-Spitzen-Werts des Rastmoments erzielt. Angemerkt sei, daß dieser erzielte Wert von 0,05Nm auch besser ist als der Minimalwert, der von einem vergleichbaren Motor mit Schalenmagneten auf der Oberfläche des Rotors 12 erzeugt wird.

Das Diagramm in Fig. 4 zeigt den Klirrfaktor des induzierten Spannungsverlaufs abhängig von der Magnetbreite b. Bei 140° Magnetbreite wird ein Klirrfaktor des Spannungsverlaufs von 1% erzeugt, im Vergleich mit dem optimalen Wert von 2,2% für den herkömmlichen IPM-Motor ohne Anisotropie bei einem optimalen Winkel der Magnetbreite von 127° elektrisch. Dieser Faktor von 1,0% ist identisch dem Minimalwert, der von einem vergleichbaren Motor mit Schalensegmenten auf der Oberfläche des Rotors erzeugt wird.

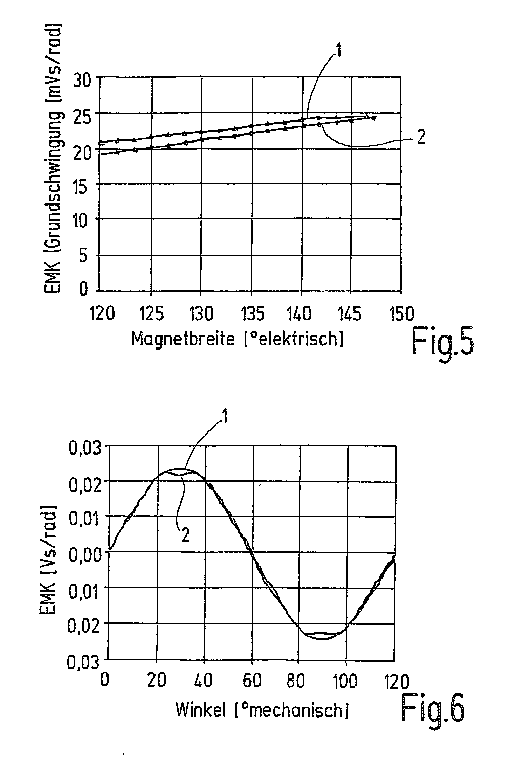

Fig. 5 zeigt die Spitzenwerte der Grundschwingung des Verlaufs der induzierten Spannung (elektromotorische Kraft - EMK) über die Magnetbreite b. Die Spitze des Grundschwingungswerts des Synchronmotors mit Flußbarrieren ist durchschnittlich um 1,2% höher als bei dem bekannten IPM-Motor bei allen Magnetbreiten. Die maximale Erhöhung der Spitze der Grundschwingung ist 8,5% höher als beim bekannten IPM-Motor bei einer Magnetbreite von 120° elektrisch.

Fig. 6 zeigt den Verlauf der induzierten Spannung (EMK) eines Strangs des Synchronmotors mit Flußbarrieren im Vergleich zu dem bekannten IPM-Motor ohne Flußbarrieren, und zwar für eine gleiche Magnetbreite von 140° elektrisch. Aufgrund des von dem Synchronmotor mit Flußbarrieren erzeugten Klirrfaktors von nur 1,0% im Vergleich zu 3,9% des bekannten IPM-Motors (vgl. Fig. 4) ist der Verlauf der EMK deutlich sinusförmiger als beim bekannten IPM-Motor, wo ein mehr trapezförmiger Verlauf zu beobachten ist.

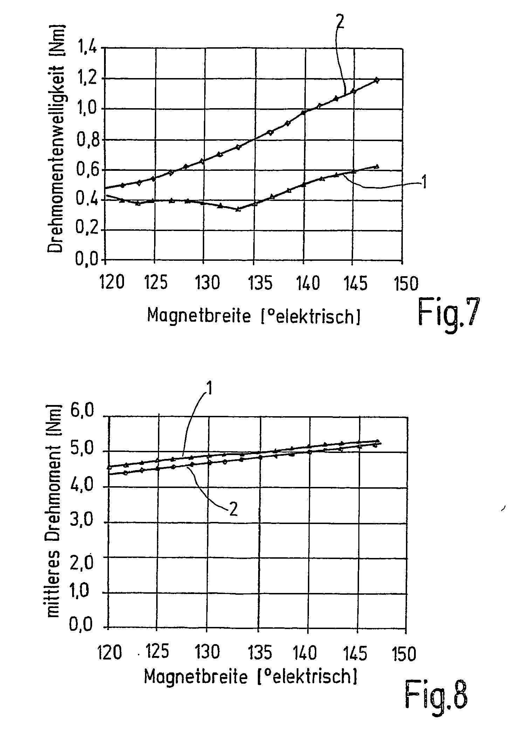

Fig. 7 zeigt die Drehmomentenwelligkeit beider zu vergleichender Motoren bei verschiedenen Magnetbreiten b. Der optimale Wert des Synchronmotors mit Flußbarrieren beträgt ungefähr 133° elektrisch, wobei ein Spitzen-Spitzen-Wert der Drehmomentenwelligkeit von nur 0,34Nm erreicht wird, im Vergleich mit einem optimalen Wert von 0,48Nm für den bekannten IPM-Motor bei einem optimalen Winkel der Magnetbreite von 120°elektrisch. Bei dem erfindungsgemäßen Synchronmotor wird durch die Anwendung der anisotropen Schenkelpolgeometrie mit mehrfachen, parallelen Flußbarrieren eine 29%ige Reduktion des Spitzen-Spitzenwerts der Drehmomentenwelligkeit erreicht. Angemerkt sei, daß diese Welligkeit von 0,34Nm ebenfalls besser ist als der minimale Wert, der bei einem vergleichbaren Motor mit Schalensegmenten auf der Oberfläche des Rotors 12 erreicht wird.

Fig. 8 zeigt das mittlere Drehmoment in Abhängigkeit von der Magnetbreite b. Das mittlere Drehmoment des Synchronmotors mit Flußbarrieren ist bei allen Magnetbreiten durchschnittlich 3,1% höher als beim bekannten IPM-Motor. Die maximale Erhöhung des mittleren Drehmoments beträgt 4,8%. Dabei wurde keine Vorkommutierung verwendet.

Diagramm 9 zeigt die Schenkeligkeit L_{q}/L_{d} der beiden Motoren in Abhängigkeit von dem Effektivwert des Strangstroms. Für eine Anwendung des Synchronmotors, bei der eine sehr niedrige Drehmomentenwelligkeit gefordert wird, sollte der Motor über das ganze Strangstromspektrum eine Schenkeligkeit von 1,0% haben. Diese Bedingung wird von Motoren mit Schalenmagneten auf der Oberfläche des Rotors erfüllt. Ist die Querachsen-Induktivität L_{q} größer als die Längsachsen-Induktivität L_{d}, so kann dies zu einer Erhöhung der Drehmomentenwelligkeit führen.

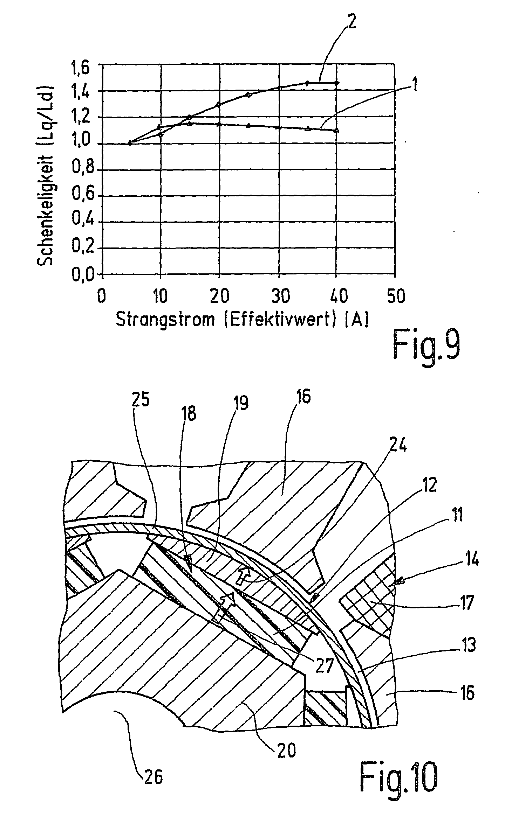

Bei dem bekannten IPM-Motor ohne Flußbarrieren wird bei einer Erhöhung des Strangstroms der Längsachsen-Flußpfad gesättigt, wodurch die Längsachsen-Induktivität L_{d} sinkt. Der Querachsen-Flußpfad wird jedoch nicht gesättigt und deshalb bleibt die Querachsen-Induktivität L_{q} bei einer Erhöhung des Strangstroms annähernd konstant. Aufgrund dieses Verhaltens steigt die Schenkeligkeit des bekannten IPM-Motors mit dem Strangstrom an (vgl. Kurve 2 in Fig. 9). In diesem Beispiel beträgt die maximale Schenkeligkeit des bekannten IPM-Motors 1,45 bei 40A Strangstrom effektiv. Beim erfindungsgemäßen Synchronmotor mit Flußbarrieren wird bei einer Erhöhung des Strangstroms der Längsachsen- und der Querachsen-Flußpfad gesättigt. Der Querachsen-Induktivitätsabfall ist jedoch niedriger als der Längsachsen-Induktivitätsabfall. Die Schenkeligkeit von 1,0 wird zwar nicht erreicht, doch wird gegenüber dem bekannten IPM-Motor die Schenkeligkeit stark verringert und beträgt in diesem Beispiel nur noch 1,15 ab 15A Strangstrom effektiv.

Bei dem in Fig. 10 ausschnittweise im Querschnitt dargestellten, modifizierten Synchronmotor sind zur Erzielung der magnetischen Anisotropie in den Schenkelpolen 18 die Polschuhe 19 aus 2D-anisotropem SMC (Soft Magnetic Composite)-Pulvereisenmaterial hergestellt. Dieses Material hat eine Vorzugsrichtung der Magnetisierung bzw. der magnetischen Permeabilität, wie sie in Fig. 10 durch den Pfeil 24 angedeutet ist. Die magnetischen Eigenschaften des Materials in dieser magnetischen Vorzugsrichtung sind wesentlich besser, z.Z. ungefähr vier bis fünfmal, als die magnetischen Eigenschaften dieses Materials senkrecht zur Vorzugsrichtung. Beispielsweise beträgt die relative Permeabilität des Materials in Vorzugsrichtung (Pfeil 24) ungefähr 800, während die maximale, relative Permeabilität quer zur Vorzugsrichtung (senkrecht zu Pfeil 24) ca. 200 ist. Auch durch dieses kernorientierte SMC-Pulvereisenmaterial wird ein paralleler Flußverlauf in den Polschuhen 19 wie bei der Ausbildung von Flußbarrieren erzielt, was zu den beschriebenen vorteilhaften Eigenschaften des Motors führt. Die Magnetisierungsrichtung 27 des Permanentmagneten 11 ist in Fig. 10 durch Pfeil 27 symbolisiert. In den beiden benachbarten Permanentmagneten 11 ist die Magnetisierungsrichtung 27 invers.

Auch bei dem Rotor gemäß Fig. 10 ist der Rotorkern 20 als polygonales Prisma ausgeführt und ist bei einer - wie dargestellt - sechspoligen Auslegung des Synchronmotors ein Sechskantprisma. Die ebenfalls quaderförmigen Permanentmagnete 11 liegen an jeweils einer Fläche des Sechskantprismas an und werden auf ihrer davon abgekehrten Seite von einem Polschuh 19 überdeckt. Die Polschuhe 19 sind von einem konzentrischen Schutzrohr 25 aus magnetisch nicht oder magnetisch schlecht leitendem Material umschlossen, das das SMC-Material der Polschuhe 19 und den Rotor 12 insgesamt schützt. Der Rotorkern 20 besteht aus massivem Stahl oder ist wiederum aus einer Vielzahl von aneinanderliegenden Blechlamellen zusammengesetzt, die jeweils ein Sechskantprofil mit ausgestanzter, zentraler, kreisförmiger Öffnung 26 aufweisen.

## Patentansprüche

1. Elektrische Maschine, insbesondere bürstenloser Synchronmotor, mit einem Stator (14) und einem Rotor(12) mit über den Umfang verteilt angeordneten Schenkelpolen (18), die jeweils einen eingeschlossenen Permanentmagneten (11) und einen sich daran radial nach außen fortsetzenden, einen Luftspalt (13) zwischen Stator (14) und Rotor (12) begrenzenden Polschuh (19) aufweisen, wobei die Polschuhe (19) magnetisch anisotrop mit parallel zur radialen Schenkelpolachse verlaufender Vorzugsrichtung der größeren magnetischen Leitfähigkeit ausgebildet sind, **wobei** zur Erzielung der magnetischen Anisotropie in die Polschuhe (19) eine Mehrzahl von voneinander beabstandeten Flußbarrieren (22) eingearbeitet sind, die parallel zur radialen Schenkelpolachse verlaufen, **und** die Flußbarrieren (22) von Aussparungen (23) in den Polschuhen (19) gebildet sind, wobei der Rotor (12) eine polygonalen, prismenförmigen Rotorkern (20) aufweist, an dem die Permanentmagnete (11) anliegen, daß die Polschuhe (19) die Permanentmagnete (11) auf deren vom Rotorkern (20) abgekehrten Seite überdecken, in Umfangsrichtung einstückig aneinanderstoßen und an den Stoßstellen mittels schmaler Radialstege (21) an dem Rotorkern (20) einstückig angebunden sind, daß der Rotorkern (20) mit Polschuhen (19) und Radialstegen (21) aus einer Vielzahl von einstückigen, aneinanderliegenden Blechlamellen zusammengesetzt ist **dadurch gekennzeichnet daß** die Aussparungen (23) kammartig mit zu Einschuböffnungen für die Permanentmagnete (11) weisenden Kammöffnungen in den Blechlamellen ausgestanzt sind wobei die Anzahl der Aussparungen (23) pro Polschuh (19) abhängig von der Schenkelpolbreite und der Dicke der Blechlamellen gewählt ist und die besagte Anzahl der Aussparungen (23) so groß wie möglich ist.

2. Maschine nach Anspruch 1, **dadurch gekennzeichnet, daß** die Anzahl der Aussparungen (23) pro Polschuh (19) abhängig von der Schenkelpolbreite und der Dicke der Blechlamellen gewählt ist.

3. Maschine nach einem der Ansprüche 1- 3, **dadurch gekennzeichnet, daß** die elektrische Maschine ein sechspoliger Synchronmotor ist und der Rotorkern (20) ein Sechskantprisma ist.

4. Maschine nach einem der Ansprüche 1 - 3, **dadurch gekennzeichnet, daß** die Permanentmagnete (11) quaderförmig ausgebildet sind und eine zur Normalen auf den größten Magnetflächen (111,112) parallel verlaufende Magnetisierungsrichtung aufweisen und daß die Vorzugsrichtung der größeren magnetischen Leitfähigkeit der Polschuhe (19) mit der Magnetisierungsrichtung (27) der Permanentmagnete (11) zusammenfällt.

## Claims

1. Electrical machine, in particular brushless synchronous motor, having a stator (14) and a rotor (12) with salient poles (18) which are arranged distributed over the circumference and which each have an incorporated permanent magnet (11) and a pole shoe (19) which continues radially outward from said permanent magnet and bounds an air gap (13) between the stator (14) and the rotor (12), with the pole shoes (19) being designed to be magnetically anisotropic with a preferred direction of the relatively high magnetic permeability which runs parallel to the radial salient pole axis, with a plurality of flux barriers (22) which are spaced apart from one another and run parallel to the radial salient pole axis being incorporated in the pole shoes (19) in order to achieve the magnetic anisotropy, and the flux barriers (22) being formed by cutouts (23) in the pole shoes (19), with the rotor (12) having a polygonal, prismatic rotor core (20) on which the permanent magnets (11) rest, with the pole shoes (19) covering the permanent magnets (11) on that side of the said permanent magnets which is averted from the rotor core (20), integrally butting against one another in the circumferential direction and being integrally connected to the rotor core (20) at the abutment points by means of narrow radial webs (21), with the rotor core (20) with pole shoes (19) and radial webs (21) being composed of a large number of integral sheet metal laminations which rest one on the other, **characterized in that** the cutouts (23) are punched out of the sheet metal laminations in a comb-like manner with comb openings which point toward insert openings for the permanent magnets (11), with the number of cutouts (23) per pole shoe (19) being selected as a function of the salient pole width and the thickness of the sheet metal laminations, and the said number of cutouts (23) being as large as possible.

2. Machine according to Claim 1, **characterized in that** the number of cutouts (23) per pole shoe (19) is selected as a function of the salient pole width and the thickness of the sheet metal laminations.

3. Machine according to one of Claims 1-3, **characterized in that** the electrical machine is a six-pole synchronous motor, and the rotor core (20) is a hexagonal prism.

4. Machine according to one of Claims 1-3, **characterized in that** the permanent magnets (11) are of cuboidal design and have a magnetization direction which runs parallel to the normal on the largest magnetic areas (111, 112), and **in that** the preferred direction of the relatively high magnetic permeability of the pole shoes (19) coincides with the magnetization direction (27) of the permanent magnets (11).

## Revendications

1. Machine électrique, en particulier moteur synchrone sans balais, doté d'un stator (14) et d'un rotor (12) qui présente des pôles saillants (18) répartis à la périphérie et dotés chacun d'un aimant permanent (11) intégré et d'un sabot polaire (19) qui en déborde radialement vers l'extérieur et qui délimite un entrefer (13) entre le stator (14) et le rotor (12), les sabots polaires (19) étant magnétiquement anisotropes, la direction préférentielle de la plus grande capacité magnétique s'étendant parallèlement à l'axe polaire radial du pôle saillant,
plusieurs barrières de flux (22) situées à distance les unes des autres étant ménagées dans les sabots polaires (19) pour obtenir l'anisotropie magnétique et s'étendant parallèlement à l'axe polaire radial du pôle saillant,
les barrières de flux (22) étant formées par des découpes (23) ménagées dans les sabots polaires (19),
le rotor (12) présentant une âme polygonale prismatique de rotor (20) sur laquelle sont placés les aimants permanents (11),
les sabots polaires (19) recouvrant les aimants permanents (11) sur leur côté non tourné vers l'âme (20) du rotor, se joignant d'un seul tenant dans la direction périphérique et étant reliés à l'âme (20) du rotor au moyen de courtes nervures radiales (21) aux emplacements de jonction,
et l'âme (20) du rotor avec les sabots polaires (19) et les nervures radiales (21) étant constituée de plusieurs lamelles de tôle d'une seule pièce posées les unes contre les autres,
**caractérisée en ce que**
les découpes (23) sont estampées en peigne dans les lamelles de tôle, les ouvertures de peigne étant tournées vers des ouvertures d'insertion des aimants permanents (11),
**en ce que** le nombre des découpes (23) de chaque sabot polaire (19) est sélectionné en fonction de la largeur des pôles saillants et de l'épaisseur des lamelles de tôle et
**en ce que** ledit nombre de découpes (23) est aussi grand que possible.

2. Machine selon la revendication 1, **caractérisée en ce que** le nombre des découpes (23) de chaque sabot polaire (19) est sélectionné en fonction de la largeur des pôles saillants et de l'épaisseur des lamelles de tôle.

3. Machine selon l'une des revendications 1 à 3, **caractérisée en ce que** la machine électrique est un moteur synchrone à six pôles et **en ce que** l'âme (20) du rotor est un.prisme hexagonal.

4. Machine selon l'une des revendications 1 à 3, **caractérisé en ce que** les aimants permanents (11) ont une forme parallélépipédique et présentent une direction de magnétisation qui s'étend parallèlement à la normale à la plus grande surface magnétique (111, 112) et **en ce que** la direction préférentielle de la plus grande capacité magnétique des sabots polaires (19) coïncide avec la direction de magnétisation (27) des aimants permanents (11).
